# DEMANDE DE BREVET EUROPEEN

(11) **EP 4 848 180 A1**
(43) Date de publication de la demande: **02.12.2026**
(21) Numéro de dépôt: 26176972.3
(22) Date de dépôt: 06.05.2026
(51) Int. Cl.: G06Q 10/42, G06F 21/31, G06F 21/44, G06F 21/55, G06Q 10/48

(54) **PROCÉDÉ DE SÉCURISATION D'ÉCHANGES, TERMINAL ET SERVEUR CORRESPONDANTS**

(30) Priorité: 30.05.2025 FR 2505836
(71) Demandeur: Orange, 92130 Issy-les-Moulineaux (FR)
(72) Inventeur: HEMERY, Baptiste François, 92326 CHATILLON CEDEX (FR); JEANNE, Fabrice, 92326 CHATILLON CEDEX (FR); MORIN, Maxence, 92326 CHATILLON CEDEX (FR); GOMOND, Olivia, 92326 CHATILLON CEDEX (FR)
(74) Mandataire: Vidon Brevets & Stratégie

(57) **Abrégé**

Un procédé de sécurisation concerne un échange initié par un deuxième terminal à destination d'un premier terminal. Le procédé comprend :
- obtention (E10) d'un premier vecteur de caractéristiques (V1) associé à un premier équipement terminal et d'un deuxième vecteur de caractéristiques (V2) associé à un deuxième équipement terminal, les premier et deuxième vecteurs de caractéristiques (V1, V2) étant chacun obtenus à l'aide d'une projection appliquée sur un graphe d'historique d'échanges, ledit graphe d'historique synthétisant un historique des échanges entre une pluralité de terminaux comprenant les premier et deuxième terminaux ledit échange en fonction des premier et deuxième vecteurs de caractéristiques.

## Description

### 1. Domaine

L'invention concerne le domaine de la sécurisation des échanges entre dispositifs de type terminaux. Ces échanges peuvent également être appelés « transactions » dans le cadre de la présente invention. Par échange ou « transaction », on entend une interaction bipartite, comme par exemple un appel, un message (SMS, RCS, un courriel...) ou un règlement (par exemple suite à un achat en ligne).

### 2. Art antérieur

Le domaine des services dit transactionnels ou d'échanges (i.e. relatifs à des échanges entre parties) est en pleine expansion et recouvre une large palette d'usages. Avec sa démocratisation, par exemple via des services tels qu'Orange Money et d'autres services de télécommunications (SMS, RCS, courriels, appels), le besoin en sécurité au sein de ces services s'accroît. Il est en particulier nécessaire de limiter ou bloquer les usages imprévus ou prohibés de ces services, et de mitiger les attaques utilisant de tels services. Avec l'explosion du nombre d'utilisateurs, la multiplicité d'acteurs malveillants exploitant ces services engendre par ailleurs une évolution constante des stratégies d'attaque, ce qui nécessite une adaptation constante des moyens de détection de ces acteurs. Ces services deviennent ainsi des cibles pour des fraudeurs, qui tentent d'entrer en contact avec de potentielles victimes, par hasard ou en usurpant l'identité d'une relation de confiance. De plus, les utilisateurs peuvent parfois, involontairement, initier ou recevoir des transactions de contacts indésirables en raison d'erreurs de saisie, ou de liens frauduleux. Il est donc important de notifier les utilisateurs et d'empêcher, si nécessaire, de telles mises en relation.

Toutefois, la sécurisation de ces échanges et la protection des utilisateurs dans un environnement si dynamique est un véritable défi technique et opérationnel. En effet, le contexte d'exploitation de ces services, l'absence d'étiquetage des données échangées et des difficultés d'interprétation des résultats - pour une multiplicité de raisons telles que le respect de la confidentialité, le coût et la complexité des enquêtes de terrain - sont autant d'obstacles à la protection des utilisateurs. Or, l'identification rapide, précise et efficace de groupes d'utilisateurs frauduleux (blanchiment, phishing, usages détournés...) et leur neutralisation, *a fortiori* à partir d'échantillons limités de données, est une contrainte prioritaire dans l'environnement opérationnel de ces services. Il est donc essentiel de développer des méthodes d'apprentissage capables de faire des prédictions sur des systèmes complexes en constante évolution, tout en garantissant efficacité en termes de temps de calcul et de qualité de prédiction.

À cet effet, on connaît l'usage de listes noires et blanches de type « hostlist ». Ces listes contiennent un ensemble d'identifiants, par exemple des numéros de téléphone, qui sont catégorisés comme à risque (liste noire) ou de confiance (liste blanche). Une telle classification permet de contrôler rapidement la présence d'un identifiant sur une liste et d'agir en conséquence. L'inconvénient majeur de ces listes existent réside dans le fait qu'elles doivent être régulièrement mises à jour, et ne sont pas exhaustives. En particulier, la mise à jour manuelle est une opération fastidieuse pour l'utilisateur. En outre, ce système de liste ne permet pas d'établir *a priori* dès le premier échange si un utilisateur est frauduleux.

Depuis quelques années, des méthodes plus dynamiques et adaptables ont été développées. Dans ce cadre, l'approche par apprentissage machine (*machine learning*) permet de construire des règles de tri et de détecter les anomalies. Cette approche repose sur des caractéristiques intrinsèques aux transactions, des données tabulaires, mais ne tient toutefois pas suffisamment compte de l'aspect structurel et relationnel des systèmes de fraude. L'ajout de métriques issues de l'apprentissage machine pour améliorer la détection n'empêche en rien les fraudeurs d'adapter leur technique pour parvenir à contourner ou exploiter des failles dans les règles de détection mises en œuvre.

Une approche complémentaire repose sur la détection de communautés pour déterminer si un échange est frauduleux ou non. Cette approche repose sur le calcul d'une ou plusieurs distances sociales, afin de détecter l'appartenance des utilisateurs à une ou plusieurs communautés, capturant ainsi le contexte social des utilisateurs (typiquement des individus). A partir de ce contexte, le calcul de cette distance sociale entre utilisateurs permet alors d'établir un niveau de confiance relatif à un échange au sein du réseau. Toutefois, cette approche induit une énorme complexité algorithmique dès lors qu'elle est mise en œuvre sur de grands réseaux transactionnels. En outre, la définition de communautés stables impose un usage conséquent du service d'échanges, ces communautés stables étant garantes de la fiabilité de la détection issue du calcul de distance sociale. Aussi, cette approche nécessite un usage conséquent du service d'échanges avant d'atteindre une efficacité suffisante. Ainsi, même si cette approche permet de différencier efficacement les utilisateurs légitimes des utilisateurs indésirables, elle n'est pas sans inconvénients. Outre son coût computationnel (complexité), cette approche ne permet pas de traiter efficacement de nouveaux acteurs du réseau, notamment présentant des caractéristiques anormales (false flag), le temps d'acquérir suffisamment de données pour intégrer le réseau. Enfin, cette approche n'est, à l'heure actuelle, pas respectueuse de la vie privée des utilisateurs, et nécessite entre autres le partage de données personnelles, notamment l'appartenance à telle ou telle communauté, pour calculer efficacement cette distance sociale.

Il existe un besoin d'une technique de détection de fraude, lors d'un échange, qui soit fiable, rapide à mettre en œuvre, adaptable et respectueuse de la vie privée des utilisateurs.

### 3. Exposé de l'invention

L'invention vient améliorer la situation. À cette fin, l'invention propose un procédé de sécurisation d'un échange initié par un deuxième terminal à destination d'un premier terminal, le procédé étant caractérisé en ce qu'il comprend :
- une obtention d'un premier vecteur de caractéristiques associé à un premier équipement terminal et d'un deuxième vecteur de caractéristiques associé à un deuxième équipement terminal, les premier et deuxième vecteurs de caractéristiques étant chacun obtenus à l'aide d'une projection appliquée sur un graphe d'historique d'échanges, ledit graphe d'historique synthétisant un historique des échanges entre une pluralité de terminaux comprenant les premier et deuxième terminaux;
- une comparaison entre les premier et deuxième vecteurs de caractéristiques ; et
- un déclenchement d'une action au sein du premier terminal bloquant ou autorisant ledit échange en fonction de ladite comparaison entre les premier et deuxième vecteurs de caractéristiques.

Par exemple, le graphe d'historique d'échanges est stocké de manière distante dudit premier terminal.

Grâce à ce procédé de sécurisation d'un genre nouveau, il est possible de sécuriser un échange de manière fiable, en se fondant sur l'historique des échanges entre terminaux, tout en préservant la confidentialité des utilisateurs.

Par graphe d'historique d'échanges, on entend un graphe relatif à un service d'échanges dans lequel chaque nœud correspond à un utilisateur dudit service d'échanges ou d'un terminal correspondant (dont le premier terminal et le deuxième terminal), et dont chaque arrête correspond à un échange passé entre deux nœuds. Ce graphe d'historique d'échanges synthétise ainsi tous les échanges passés entre utilisateurs d'un service d'échanges, éventuellement sur une période de temps passée.

En effet, l'utilisation d'une projection pour générer les vecteurs de caractéristiques empêche toute rétro-ingénierie, c'est-à-dire qu'il est impossible à partir des vecteurs de caractéristiques de remonter à un quelconque historique réel des échanges de l'un ou l'autre des terminaux. De manière similaire, il n'est pas possible pour l'utilisateur comme pour un tiers d'identifier si l'utilisateur appartient à une ou des communautés du graphe d'historique d'échanges, et encore moins une communauté précise.

Aussi, aucune donnée personnelle d'un utilisateur n'est stockée sur le terminal d'un tiers pour mettre en œuvre ce procédé. Bien que les premier et deuxième vecteurs de caractéristiques ne contiennent pas d'information lorsqu'ils sont chacun pris isolément, leur comparaison et la mesure de leur similarité permet de mesurer indirectement la proximité des utilisateurs respectifs du premier et du deuxième terminal dans le graphe d'historique d'échanges.

En outre, ce procédé est efficace y compris dès la première interaction entre deux terminaux. Ce procédé permet en outre de signaler comme frauduleux ou comme authentique un deuxième terminal qui chercherait à échanger avec le premier terminal, même s'ils n'ont jamais eu la moindre opportunité d'échanger avant. Par exemple, un artisan appelant un particulier pour la première fois, et ayant déjà eu des contacts avec des proches de ce particulier, peut être signalé comme authentique dès le premier échange.

Enfin, ce procédé est économique à sa mise en œuvre, car il est possible de calculer des projections aléatoires sur de très grands graphes, rendant ce procédé exploitable en conditions réelles. Le calcul des vecteurs de caractéristiques d'utilisateurs peut être mis en œuvre très régulièrement, par exemple toutes les 24h, là où les approches par identification de communautés ne peuvent au mieux être mises à jour que mensuellement, en raison de l'énorme quantité de calculs requise. Ainsi, cette mise à jour à intervalles réduits des vecteurs de caractéristiques permet une adaptation dynamique du procédé dans un environnement très changeant. La détection et la neutralisation d'utilisateurs frauduleux en est considérablement améliorée, notamment pour les nouveaux profils suspects.

Selon un aspect particulier, le procédé est mis en œuvre au sein du premier terminal et comprend en outre :
- une comparaison entre les premier et deuxième vecteurs de caractéristiques, le déclenchement de l'action au sein du premier équipement terminal bloquant ou autorisant ledit échange étant réalisé en fonction de ladite comparaison entre les premier et deuxième vecteurs de caractéristiques.

Selon un aspect particulier, le procédé est mis en œuvre au sein du premier terminal et comprenant :
- une réception (F2) d'une demande d'échange en provenance dudit deuxième terminal (U2), déclenchant l'obtention d'un identifiant (ID_U2) dudit deuxième terminal (U2) ;
- ladite obtention (F10) des premier et deuxième vecteurs de caractéristiques comprenant une réception (F10), en provenance d'un serveur distant (S), dudit premier vecteur de caractéristiques et dudit deuxième vecteur de caractéristiques à l'aide de l'identifiant du deuxième terminal.

Dans cette implémentation, la comparaison entre les vecteurs de caractéristiques est mise en œuvre côté terminal, tout en préservant la vie privée du deuxième terminal pour les raisons susmentionnées. Cette implémentation permet avantageusement de stocker, au moins temporairement, le vecteur de caractéristiques du premier terminal tant qu'il est valide. Aussi, à réception d'une autre demande d'échange en provenance d'un troisième terminal, ou du deuxième terminal, il n'est pas nécessaire que le premier terminal obtienne de nouveau son propre vecteur de caractéristiques.

Selon un aspect particulier, le procédé est mis en œuvre par un serveur en communication avec ledit premier terminal, et comprend en outre :
- une obtention de l'identifiant du premier terminal et de l'identifiant du deuxième terminal;
- l'obtention des premier et deuxième vecteurs de caractéristiques étant réalisée à l'aide desdits identifiants ; et
- la transmission, audit premier terminal, d'un message dont le contenu est fonction de la comparaison entre les premier et deuxième vecteurs de caractéristiques, laquelle transmission déclenche ladite action au sein du premier terminal bloquant ou autorisant ledit échange.

Dans cette implémentation, l'obtention des vecteurs de caractéristiques est réalisée directement au sein du serveur, de même que leur comparaison. Cela allège les échanges entre le premier terminal et le serveur. En outre, le message ainsi transmis est de taille réduite. Ce message peut être soit le résultat de la comparaison (par exemple une distance vectorielle ou un score de similarité), dans le cas où le seuil est fixé au sein du premier terminal, soit un message signalant la fiabilité ou la non-fiabilité du deuxième terminal. Cette approche plus souple permet avantageusement de centraliser les calculs et éventuellement de conserver un certain contrôle sur le signalement des échanges.

Selon un aspect particulier, la projection est une projection aléatoire, reposant optionnellement sur l'algorithme « *Fast Random Projection* » FastRP.

L'utilisation d'une projection de type aléatoire renforce encore davantage la protection de la vie privée des utilisateurs. En effet, le résultat d'une telle projection est non seulement non déterministe, mais chaque projection est totalement décorrélée des projections précédentes.

En outre, parmi les projections aléatoires, la projection FastRP permet avantageusement de réaliser une projection aléatoire très rapide et à faible complexité. La mise en œuvre régulière de cette projection FastRP permet une mise à jour très régulière des vecteurs de caractéristiques et donc un suivi très fin et dynamique des interactions entre utilisateurs au sein du graphe, tout en préservant la confidentialité des échanges en tant que tels.

Alternativement, la projection aléatoire repose sur au moins un algorithme appartenant au groupe comprenant : Node2Vec, DeepWalk, GIN.

Selon un aspect particulier, la projection est appliquée sur le graphe d'historique d'échanges à intervalles réguliers selon une fréquence prédéterminée.

Une telle fréquence peut être relativement élevée, par exemple toutes les 24h ou toutes les 12h, ce qui permet de tenir compte de toutes les évolutions très récentes du graphe d'échanges.

Selon un aspect particulier, le déclenchement d'une action au sein du premier terminal bloquant ou autorisant ledit échange est mis en œuvre en fonction d'une comparaison entre une distance vectorielle entre les premier et deuxième vecteurs de caractéristiques avec un seuil prédéterminé.

Selon un aspect particulier, l'action au sein du premier terminal est un blocage automatique de la demande d'échange.

Un tel blocage automatique permet de ne pas importuner l'utilisateur avec une notification (appel, message...) lorsque l'échange est détecté comme frauduleux.

Selon un aspect particulier, l'action au sein du premier terminal comprend une présentation d'un signal à l'utilisateur du premier terminal indiquant un caractère frauduleux ou authentique de la demande d'échange.

Dans un tel cas, l'utilisateur a la main et le dernier mot sur le blocage ou non d'une demande d'échange. Cela permet d'éviter que l'utilisateur ne rate certaines demandes d'échange.

L'invention concerne également un serveur pour une sécurisation d'un échange initié par un deuxième terminal à destination d'un premier terminal, le serveur comprenant au moins un processeur configuré pour:
- obtenir un premier vecteur de caractéristiques associé à un premier équipement terminal et un deuxième vecteur de caractéristiques associé à un deuxième équipement terminal, les premier et deuxième vecteurs de caractéristiques étant chacun obtenus à l'aide d'une projection appliquée sur un graphe d'historique d'échanges, ledit graphe d'historique synthétisant un historique des échanges entre une pluralité de terminaux comprenant les premier et deuxième terminaux;
- transmettre à destination du premier terminal un message déclenchant une action au sein du premier terminal bloquant ou autorisant ledit échange en fonction du premier vecteur de caractéristiques et du deuxième vecteur de caractéristiques.

L'invention concerne en outre un terminal apte à recevoir une demande d'échange initié par un deuxième terminal à destination dudit terminal, appelé premier terminal, le premier terminal comprenant au moins un processeur configuré pour :
- autoriser ou bloquer ledit échange en fonction d'un premier vecteur de caractéristiques associé à un premier équipement terminal et d'un deuxième vecteur de caractéristiques associé à un deuxième équipement terminal, les premier et deuxième vecteurs de caractéristiques étant chacun obtenus à l'aide d'une projection appliquée sur un graphe d'historique d'échanges, ledit graphe d'historique synthétisant un historique des échanges entre une pluralité de terminaux comprenant les premier et deuxième terminaux.

L'invention concerne enfin un produit programme d'ordinateur comportant des instructions de code de programme pour la mise en œuvre de l'un des procédés susmentionnés.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- [Fig. 1] représente un exemple de procédé de sécurisation selon l'invention ;
- [Fig. 2] représente un graphe d'historique d'échanges sur lequel se fonde le procédé de la figure 1 ;
- [Fig. 3] représente un système mettant en œuvre un premier exemple d'implémentation du procédé de sécurisation de la figure 1 ;
- [Fig. 4] représente un système mettant en œuvre un deuxième exemple d'implémentation du procédé de sécurisation de la figure 1 ;
- [Fig. 5] représente un système mettant en œuvre un troisième exemple d'implémentation du procédé de sécurisation de la figure 1 ;
- [Fig. 6] représente un exemple de terminal du système de la figure 3 ;
- [Fig. 7] représente un exemple de serveur du système de la figure 3.

### 5. Description détaillée

Le principe général de l'invention est de sécuriser un service d'échange de n'importe quelle nature (appel, message type SMS, RCS, MMS ou email, demande de transfert d'argent...) en exploitant l'historique des échanges entre utilisateurs du service, d'une manière respectueuse de la vie privée des utilisateurs, tout en protégeant cet historique des échanges de sorte qu'aucun tiers ne puisse y accéder. Cet historique d'échanges passés entre utilisateurs au sein du service d'échanges est synthétisé sous la forme d'un graphe appelé graphe d'historique d'échanges.

Pour ce faire, l'invention exploite les propriétés d'une certaine classe de fonctions appelées projections, qui permettent de générer de manière régulière des vecteurs de caractéristiques associés aux utilisateurs du service. Les vecteurs de caractéristiques résultant d'une projection ont pour bonne propriété d'être d'autant plus proches que les utilisateurs associés sont « proches » au sens du graphe d'historique des échanges. Par proche, on entend proche au sens d'une distance vectorielle ou de toute autre fonction permettant de mesurer une similarité entre vecteurs, comme on le verra ci-après. Aussi, en fonction de la proximité de deux vecteurs de caractéristiques donnés relatifs à deux parties d'un échange, l'utilisateur recevant une demande d'échange est en mesure de pouvoir déterminer une nature frauduleuse ou légitime d'une demande d'échange reçue, et ce même s'il n'a jamais interagi avec l'utilisateur requérant cet échange avant.

La sécurisation d'échange ainsi exposée repose ainsi sur la capture d'un contexte relationnel d'un individu. Ce contexte est ensuite utilisé pour procéder à la comparaison entre deux utilisateurs d'un service entrant en contact. Un niveau de confiance est alors calculé, à travers un score de similarité tel que décrit ci-dessus, pour chaque échange ou transaction entrante ou sortante. Cela permet à un opérateur, une application ou un utilisateur de décider de l'action à mener en fonction de ce niveau de confiance ainsi calculé.

La caractérisation du voisinage d'un individu est indirecte, i.e. sans accéder directement audit voisinage de l'individu, i.e. la liste de ses proches voisins dans le graphe d'historique des échanges. Cette caractérisation est le produit de la comparaison des caractéristiques de l'émetteur et du destinataire pour établir un score de confiance de l'échange. La similarité évoquée ci-dessus (par exemple une distance vectorielle) peut, en d'autres termes, être vue comme un niveau de proximité sociale.

Cela repose sur le principe qu'une transaction « fiable » met en relation préférablement deux individus ayant une certaine proximité sociale. Formulé différemment, cette proximité sociale permet de trouver des similarités dans le comportement transactionnel sous la forme de voisins (au sens de la théorie des graphes) partagés entre les membres de ce groupe, aussi appelé partage de voisinage. Cela permet de capter les caractéristiques relationnelles propres et uniques de chaque individu. Cette capture est généralisable à l'ensemble du graphe d'historique d'échanges.

Ainsi un échange pourra être jugée fiable si les parties sont considérées comme légitimes bien qu'ayant chacun des caractéristiques différentes, en mesurant une similarité contextuelle/relationnelle à l'aide de la similarité entre vecteurs de caractéristiques. A l'opposé, une transaction faisant intervenir un interlocuteur jugé non fiable doit être identifiable à partir de la structure de groupe : liens et groupes éphémères, relations à sens unique, durée de vie courte et structure peu stable, plus dense, moins profonde.

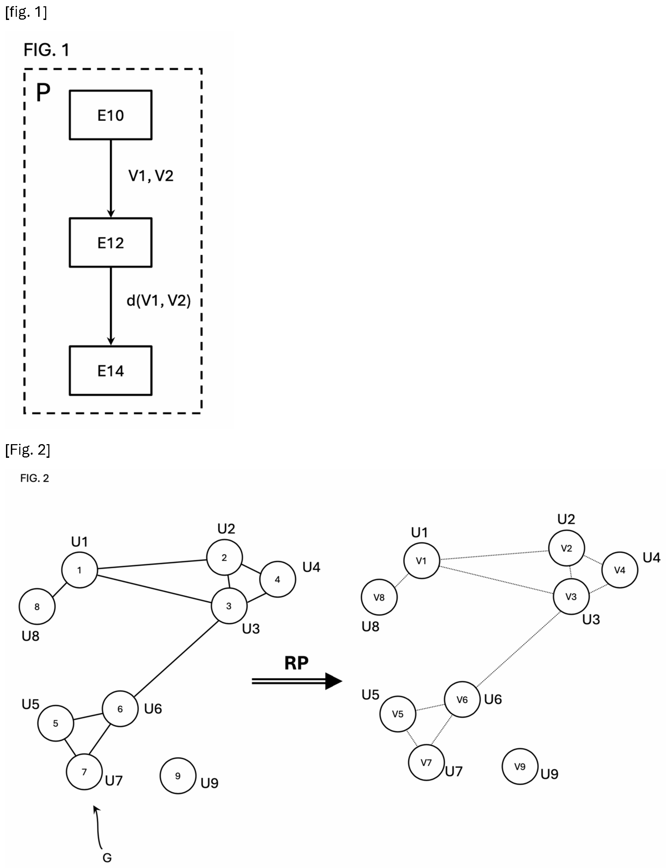

Il est fait référence à la figure 1, qui représente un exemple de procédé de sécurisation P selon l'invention. Ce procédé de sécurisation est déclenché suite à une demande d'échange à destination d'un premier terminal U1 et en provenance d'un deuxième terminal U2. Ce procédé comprend une étape E10 d'obtention de vecteurs de caractéristiques V1 et V2 associés au premier terminal U1, respectivement au deuxième terminal U2, une étape E12 de calcul d'une similarité d(V1, V2) et enfin d'une étape E14 de déclenchement d'une action en fonction de la similarité ainsi calculée. Dans l'exemple décrit ici, la similarité d(V1, V2) est une distance vectorielle, mais d'autres fonctions permettant de mesurer la similarité entre vecteurs de caractéristiques peuvent être envisagées.

Les deux vecteurs de caractéristiques V1, V2 sont obtenus en appliquant une fonction dite de projection à un graphe d'historique d'échanges G. Un tel graphe G est représenté figure 2.

Le graphe d'historique d'échanges G est un graphe composé de nœuds et d'arrêtes reliant ces nœuds. Ce graphe G est relatif à un service d'échanges. Un tel service d'échanges peut être par exemple un service de téléphonie (cellulaire ou VoIP) ou de messagerie (SMS, MMS, RCS, ou messagerie instantanée via une application, ou un service d'email ou de paiement (par exemple par virement bancaire, ou via un fournisseur de service de paiement tel que PayPal, Orange Money ou Lydia). Le graphe G peut concerner une période de temps donnée, par exemple les trois derniers mois d'exploitation du service d'échange. En variante, le graphe G peut couvrir tout l'historique d'exploitation du service d'échanges. Le graphe peut être orienté, c'est-à-dire que chaque arrête présente un sens, allant de l'émetteur d'un échange vers le destinataire de l'échange. En variante, le graphe peut être non-orienté. Chaque arrête peut correspondre à un unique échange ou au contrainte synthétiser une pluralité d'échanges entre les deux nœuds extrémités de ladite arrête.

Dans l'exemple simplifié de graphe G de la figure 2, le graphe comprend neuf nœuds référencés 1 à 9 chacun correspondant à un utilisateur référencé de U1 à U9. Chaque nœud U1... U9 est relié (ou non) à un ou plusieurs autres nœuds si ce nœud a déjà échangé avec lui au cours d'une période de temps passée. Par exemple, l'utilisateur U1 associé au nœud 1 dans l'exemple décrit ici a déjà échangé avec les utilisateurs U8, U2 et U3 (correspondant aux nœuds 8, 2 et 3). Un utilisateur peut légitimement ne jamais avoir échangé avec un autre utilisateur du service, ce qui est typiquement le cas lorsque l'utilisateur vient tout juste de rejoindre le service d'échange. C'est, en l'espèce, le cas du nœud 9 du graphe G de la figure 2 correspondant à un utilisateur n'ayant jamais interagi avec d'autres utilisateurs du graphe G.

Une fonction de projection, référencée RP, est appliquée sur le graphe G. Cette fonction a pour effet d'associer à chaque nœud i, i étant un nombre entier, un vecteur de caractéristiques Vi. Ici, aux nœuds 1 à 9 sont associés des vecteurs de caractéristiques V1 à V9. La projection est une opération qui prend en entrée un graphe (i.e. un ensemble de nœuds {1... N} reliés par des arrêtes) et renvoie en sortie une liste de vecteurs de caractéristiques V1... VN, chaque vecteur V1... VN étant associé à l'un des nœuds. Plus précisément, chaque vecteur de caractéristiques associé à un nœud donné est représentatif du voisinage du nœud, i.e. des nœuds qui sont voisins de ce nœud.

La projection a pour propriété que plus deux nœuds du graphe sont proches (au sens sont voisins ou ont des voisins communs), plus leurs vecteurs de caractéristiques associés sont proches.

Pour autant, puisque la projection RP est une projection, il y a une perte d'information au sens où, partant du résultat de la fonction (i.e. la liste des vecteurs de caractéristiques), il n'est pas possible de remonter au graphe G. De fait, une tierce personne même en possession de l'ensemble des vecteurs de caractéristiques ne peut pas remonter à la structure du graphe G. Une telle propriété préserve la vie privée des utilisateurs du service.

En outre, dans un cas particulier, la projection est une projection aléatoire. Cette projection est, comme son nom l'indique, aléatoire, c'est-à-dire que son résultat est non déterministe. Aussi, il est possible d'appliquer la projection aléatoire RP au graphe de multiples fois, de sorte à générer de manière régulière une liste de vecteurs de caractéristiques qui change en continu. De fait, seule la comparaison de deux vecteurs de caractéristiques issus de la même instance de la projection aléatoire RP est indicatrice de la proximité entre les deux nœuds correspondant aux deux utilisateurs associés aux deux vecteurs de caractéristiques. Aussi, un vecteur de caractéristiques Vi donné devient obsolète dès lors que la fonction de projection aléatoire RP est à nouveau appliquée sur le graphe G. De fait, un tiers malveillant souhaitant remonter à la structure du graphe G à partir de vecteurs de caractéristiques qu'il a obtenu légitimement ou frauduleusement ne peut y parvenir car tous les vecteurs de caractéristiques que ce tiers obtient au cours d'une période donnée sont rendus obsolètes par toute nouvelle application de la fonction de projection aléatoire RP.

A titre d'exemple, la projection aléatoire est une fonction « FastRP » (pour « Fast Random Projection »). Dans cet exemple de projection aléatoire, la taille du vecteur de caractéristiques, c'est-à-dire le nombre de coefficients que le vecteur de caractéristiques comprend, peut être arbitraire. Cette taille est notée ici K, et peut être égale à 128, 256 ou 512. A titre d'exemple, la fonction de projection aléatoire RP peut être une fonction comprenant les étapes suivantes :
i. Associer à chaque nœud *i* un vecteur ${V}_{i}^{0}$ de K coefficients (par exemple K = 128), chaque coefficient étant tiré aléatoirement ;
ii. Pour chaque nœud i à l'étape j, calculer son vecteur ${V}_{i}^{j}$ par une moyenne des vecteurs ${V}_{{i}_{1}}^{j - 1} … {V}_{{i}_{n}}^{j - 1}$ des *n* voisins *i*₁ ... *iₙ* dudit nœud i ; dans le cas d'un graphe orienté, on peut ne considérer pour cette étape de moyennage que les voisins reliés au nœud courant i par une arrête entrante (ou en variante par une arrête sortante) ;
iii. Répéter l'opération ii. et ce sur tous les nœuds jusqu'à ce que la fonction de projection aléatoire RP atteigne un nombre d'étapes prédéfini R. Le vecteur *Vᵢ* est alors calculé à partir de la moyenne pondérée par des coefficients *α*₀ ... *α_{R}* des ensembles des vecteurs ${V}_{i}^{j}$.

Les vecteurs *Vᵢ* ainsi déterminés sont les vecteurs de caractéristiques des nœuds *i*. De par la méthode par approximation des vecteurs de nœuds voisins susmentionnée, on comprend que pour deux nœuds *i* et *j* voisins, leurs vecteurs respectifs *Vᵢ* et *Vⱼ* sont proches, de sorte que leur distance vectorielle est plus réduite qu'entre deux nœuds qui ne sont pas voisins. En outre, comme la projection est aléatoire, un tiers ayant en sa possession un vecteur *Vᵢ* associé à l'utilisateur/nœud *i* généré à un instant donné avec une première instance de la projection aléatoire, un vecteur *Vⱼ* associé à l'utilisateur/nœud *j* généré à un instant donné avec une deuxième instance (distincte) de la projection aléatoire n'a aucun moyen de déterminer que ces deux nœuds sont voisins. Il est à noter qu'un tel vecteur de caractéristiques englobe ainsi non seulement de l'information sur les voisins de son nœud respectif, mais également de manière indirecte des informations sur les voisins de ses voisins.

Alternativement au critère du nombre R d'étapes (i.e. itérations de l'étape ii), l'algorithme de l'étape iii peut s'arrêter lorsque la distance entre un nouveau vecteur de caractéristiques ${V}_{i}^{j + 1}$ et l'ancien vecteur ${V}_{i}^{j}$ d'un nœud *i* est inférieur à un seuil donné, et ce pour tout ou partie des nœuds.

Le tirage aléatoire de l'étape i ci-dessus peut, par exemple, reposer sur une méthode dite « Sparse Random Projection », notée SRP. Dans une telle méthode SRP, la valeur d'un coefficient est égale à $\sqrt{s}$, 0 ou $- √ s$ avec une probabilité 1/2*s* (pour la valeur $\sqrt{s}$), 1 - 1/*s* (pour la valeur 0) et 1/2s (pour la valeur $- \sqrt{s}$), où s est la racine carrée du nombre d'arrêtes d'un nœud. Une telle méthode est décrite dans l'article Ping Li, Trevor J Hastie, and Kenneth W Church. 2006. *"Very sparse random projections."* in Proceedings of the 12th ACM SIGKDD international conference on Knowledge discovery and data mining, ACM, 287-296.

En variante, d'autres algorithmes donnant des propriétés similaires en termes de préservation de la vie privée peuvent être mis en œuvre, par exemple les algorithmes Node2vec, DeepWalk, GIN...

A titre d'exemple, les algorithmes DeepWalk et Node2Vec s'appuient sur des marches aléatoires, i.e. des chemins générés aléatoirement en parcours les nœuds/arrêtes. Ces marches aléatoires sont ensuite utilisées comme des vecteurs de jetons (i.e. des vecteurs de nœuds), sur lesquelles on applique une méthode Word2Vec pour générer des vecteurs caractéristiques pour chaque jeton qui caractérisent la probabilité d'aller d'un jeton à un autre jeton.

Toujours à titre d'exemple, l'algorithme GIN s'appuie sur des méthodes de réseaux de neurones (i.e. un nœud reçoit l'ensemble des vecteurs de ces voisins et utilise un réseau de neurones pour générer son propre vecteur) et une fonction objective (par exemple une prédiction de lien) pour générer ce vecteur de caractéristiques.

La projection RP est une opération qui est réalisée au sein d'un serveur distinct du terminal. Ainsi, ni le terminal U1, ni le terminal U2 ne sont en possession du graphe G, et ce à aucun moment. Le résultat de la projection est stocké par ce serveur, de sorte que ce serveur puisse transmettre les vecteurs de caractéristiques requis. Cette projection peut être réalisée à intervalle réguliers, de sorte à améliorer la protection du graphe, mais également pour tenir compte de toute mise à jour du graphe G. Par exemple, la projection peut être réalisée une fois toutes les 24h, une fois que le graphe G est mis à jour des interactions des 24h passées. Cette régularité dans la mise à jour des vecteurs de caractéristiques permet d'adapter très régulièrement les vecteurs de caractéristiques de sorte qu'ils reflètent l'historique récent des échanges entre les différents utilisateurs du service. L'évolution du graphe transactionnel est ainsi prise en compte avec une courte fenêtre de temps, chose impossible avec les approches à base de recoupement de communauté.

En d'autres termes, le vecteur de caractéristiques est une représentation précise et individualisée de l'historique d'échanges d'un utilisateur, permettant une comparaison de la proximité sociale de deux utilisateurs du service.

De plus, ce vecteur est unique propre à chaque utilisateur, n'est pas interprétable et ne permet pas d'identifier formellement un utilisateur ou des membres de son voisinage.

A une étape E12, donc, la distance vectorielle entre les deux vecteurs de caractéristiques V1 et V2 est calculée. Cette distance vectorielle peut être de tout type, par exemple la distance euclidienne classique, ou plus généralement une distance selon la norme p définie par *u*, *v* → ∥*u* - *v*∥*ₚ* où *u* et *v* sont deux vecteurs et ∥ ∥*ₚ* est la norme p définie ainsi : $∥ {∥}_{p} : x = \left({x}_{1}…{x}_{K}\right) \to \sqrt[p]{{x}_{1}^{p} + ⋯ + {x}_{K}^{p}}$

D'autres distances vectorielles sont envisageables, par exemple la distance cosinus. De manière plus générale, toute fonction de distance vectorielle peut être utilisée. Enfin, une comparaison à base d'apprentissage machine (« *machine learning* ») est envisageable pour mesurer la similarité entre les vecteurs de caractéristiques V1 et V2. De manière générale, toute méthode permettant de comparer deux vecteurs ou d'en mesurer leur similarité est envisageable, comme par exemple la fonction (*u*, *v*) → 1 - *u*. *v* où « . » est le produit scalaire et les vecteurs u et v sont normalisés, cette fonction étant d'autant plus proche de zéro que les vecteurs u et v sont proches, et d'autant plus proche de 1 que les vecteurs u et v sont différents. En variante, on peut envisager la fonction (*u*, *v*) → *u*. *v*.

Enfin, à l'étape E14, en fonction de la valeur de la distance vectorielle calculée entre V1 et V2 et notée pour la suite d(V1, V2), une action est mise en œuvre pour autoriser ou bloquer ledit échange, comme on le verra ci-après.

On suppose pour la suite que plus la distance d(V1, V2) entre deux vecteurs V1, V2 est faible, et plus les deux utilisateurs associés à ces deux vecteurs sont proches dans le graphe G.

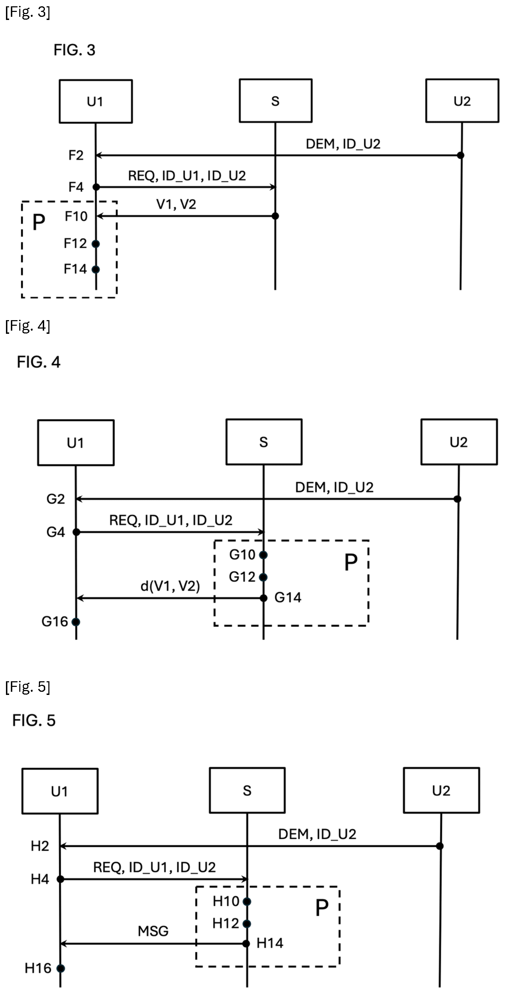

Il est fait référence à la figure 3, qui représente un premier exemple d'implémentation du procédé de sécurisation P.

On suppose que chaque terminal U1, U2 est associé à un identifiant ID_U1, ID_U2. Cet identifiant identifie l'utilisateur du service d'échanges. Par exemple, cet identifiant peut correspondre à un numéro de téléphone type MSISDN (« *Mobile Station International Subscriber Directory Number* »)*,* un UUID (« *Universally unique identifier*»)*,* une adresse email, un identifiant unique dans une application de messagerie ou de paiement,... L'identifiant peut également être une combinaison de plusieurs identifiants élémentaires, par exemple d'un MSISDN et d'une adresse MAC lorsqu'un utilisateur est susceptible d'émettre une demande d'échange depuis plusieurs terminaux différents.

À une étape F2, un premier terminal U1 reçoit une demande d'échange DEM en provenance d'un deuxième terminal U2. Cette demande DEM est accompagnée (ou contient) l'identifiant ID_U2 du terminal U2. Le premier terminal U1 obtient cet identifiant ID_U2.

À une étape F4, le premier terminal U1 émet une requête REQ à destination d'un serveur S, en joignant à la requête l'identifiant ID_U2 précédemment obtenu. Le premier terminal U1 peut également joindre son propre identifiant ID_U1, ou en variante le serveur S peut obtenir cet identifiant ID_U1 du premier terminal à travers les métadonnées nécessaires pour transmettre la requête REQ.

Le serveur S obtient les vecteurs de caractéristiques V1 et V2, soit parce qu'il les a lui-même calculés, soit en les requérant auprès d'un autre serveur (non représenté sur les figures). Le serveur S les transmet alors au premier terminal U1.

À une étape F10, le premier terminal U1 reçoit du serveur S les vecteurs de caractéristiques V1 et V2. En d'autres termes, le premier terminal U1 obtient ces vecteurs de caractéristiques V1 et V2.

À une étape F12, le premier terminal U1 calcule la distance vectorielle d(V1, V2) entre les deux vecteurs de caractéristiques V1 et V2, de la manière décrite ci-avant.

À une étape F14, le premier terminal U1 déclenche une action en fonction de la distance vectorielle d(V1, V2) ainsi calculée.

On constate qu'ici, le procédé de sécurisation P est réalisé au sein du premier terminal U1, comme cela est représenté par le rectangle en pointillés P de la figure 3.

Cette action peut être par exemple le blocage de l'échange avant d'accepter la demande d'échange, si la distance vectorielle d(V1, V2) est supérieure à un certain seuil donné. Ce blocage, automatique, permet avantageusement d'améliorer la qualité de vie de l'utilisateur puisqu'il ne voit pas les demandes d'échange perçues comme frauduleuses.

Alternativement, l'action peut être :
- un affichage d'un message d'alerte sur un écran du premier terminal U1 si la distance vectorielle d(V1, V2) est supérieure à un premier seuil, le message d'alerte indiquant que le deuxième terminal U2 est potentiellement frauduleux ;
- un affichage d'un message d'authentification sur un écran du premier terminal U1 si la distance vectorielle d(V1, V2) est inférieure à un deuxième seuil, le message d'alerte indiquant que le deuxième terminal U2 est a priori fiable.

Ce deuxième seuil peut être égal au premier seuil, ou inférieur au premier seuil.

Dans le cas d'égalité, soit un échange est reconnu comme fiable, soit comme frauduleux ou malveillant.

Dans le cas où les deux seuils sont distincts, alors soit une demande d'échange est perçue comme authentique, soit comme frauduleuse, soit ni l'une ni l'autre. Cette variante, moins binaire, permet de fournir à l'utilisateur une indication plus fine en ce que certaines demandes d'échanges ne peuvent ni être certifiées comme fiables, ni comme frauduleuses.

Par exemple, dans le cas où la distance vectorielle d(V1, V2) est comprise entre le premier seuil et le deuxième seuil, un message intermédiaire peut être affiché. Ce message intermédiaire indique que le fournisseur du service ne peut pas en garantir l'authenticité ni le caractère frauduleux. Ce message intermédiaire permet à un utilisateur de rester prudent, tout en ayant pour information que la demande d'échange n'est pas, après analyse, frauduleuse de prime abord. Ce message intermédiaire peut contenir toute information reflétant la nature « entre deux » de la demande d'échange, tel qu'une incitation à la prudence.

En variante, enfin, une combinaison des deux implémentations ci-dessus peut être mise en œuvre :
- si la distance vectorielle d(V1, V2) est supérieure au premier seuil, alors la demande d'échange est automatiquement bloquée ;
- si la distance vectorielle d(V1, V2) est comprise entre le premier seuil et le deuxième seuil, alors la demande d'échange apparaît sur le premier terminal U1 avec un message de type intermédiaire ; et
- si la distance vectorielle d(V1, V2) est inférieure au deuxième seuil, alors la demande d'échange apparaît sur le premier terminal U1 sans message d'alerte ou avec un message indicateur de la fiabilité du deuxième terminal U2.

Bien entendu, d'autres classifications plus fines à quatre catégories ou plus peuvent être mises en œuvre. Enfin, un score ou niveau de confiance correspondant à la distance vectorielle d(V1, V2) ou fonction de celle-ci peut être affiché directement sur le premier terminal U1, laissant à l'utilisateur toute latitude pour interpréter ce niveau de confiance.

Toutes ces combinaisons peuvent être mises en œuvre avec d'autres comparaisons telles que décrites ci-avant.

Les étapes mises en œuvre au sein du premier terminal U1 peuvent être mises en œuvre au sein d'une application spécialisée (sécurisée ou non) du premier terminal, ou en variante au sein du système d'exploitation du terminal. Les étapes mises en œuvre au sein du serveur S peuvent être chacune mise en en œuvre au sein d'une brique logicielle ou fonctionnelle distincte. En particulier, le terminal S peut mettre en œuvre la détermination des vecteurs de caractéristiques lui-même, ou en variante obtenir à intervalles réguliers la liste des vecteurs de caractéristiques en provenance d'un autre serveur stockant le graphe d'historique d'échanges G.

Il est maintenant fait référence à la figure 4, qui représente une variante d'implémentation du procédé de la figure 3.

Ici, les étapes G2 et G4 sont identiques aux étapes F2 et F4, respectivement.

À l'étape G4, le serveur reçoit la requête REQ accompagnée de l'identifiant ID_U2 et éventuellement de l'identifiant ID_U1.

À une étape G10, le serveur S obtient les vecteurs de caractéristiques V1 et V2, soit parce qu'il les a lui-même calculés, soit en les requérant auprès d'un autre serveur (non représenté sur les figures).

À une étape G12, le serveur S calcule la distance vectorielle d(V1, V2).

À une étape G14, le serveur S transmet cette distance vectorielle d(V1, V2) au premier terminal U1, qui reçoit donc cette distance vectorielle.

À une étape G16, le premier terminal U1 compare la distance vectorielle ainsi reçue à un seuil comme expliqué ci-avant, et peut mettre en œuvre l'action susmentionnée autorisant ou bloquant l'échange, de manière analogue à l'étape F12 décrite ci-dessus. Ainsi, l'étape G14 déclenche l'action mise en œuvre à l'étape G16.

On comprend ainsi que, dans cette implémentation représentée figure 4, le procédé de sécurisation P est réalisé au sein du serveur S, comme cela est représenté par le rectangle en pointillés P de la figure 4.

Il est maintenant fait référence à la figure 5, qui représente une variante d'implémentation du procédé de la figure 4.

Les étapes H2, H4, H10 et H12 sont similaires aux étapes G2, G4, H10 et G12, respectivement.

À une étape H14, le serveur S détermine si la distance vectorielle d(V1, V2) calculée est supérieure ou non à un premier seuil donné. En fonction du résultat de cette comparaison, le serveur transmet à destination du premier terminal U1 un message MSG comprenant une information indiquant que la demande d'échange est frauduleuse (si la distance vectorielle d(V1, V2) calculée est supérieure au premier seuil) ou non-frauduleuse (la distance vectorielle d(V1, V2) calculée est inférieure au premier seuil).

À réception du message MSG, le premier terminal U1 met en œuvre l'une des actions décrites en relation avec l'étape F12 ci-dessus : blocage/autorisation de l'échange, ou en variante un affichage d'un message indicateur de la nature de l'échange (frauduleux/malveillant, authentique, du type message intermédiaire ci-dessus).

Ainsi, l'étape H14 déclenche l'action mise en œuvre à l'étape H16. On comprend qu'ici aussi le procédé de sécurisation P susmentionné est mis en œuvre au sein du serveur S.

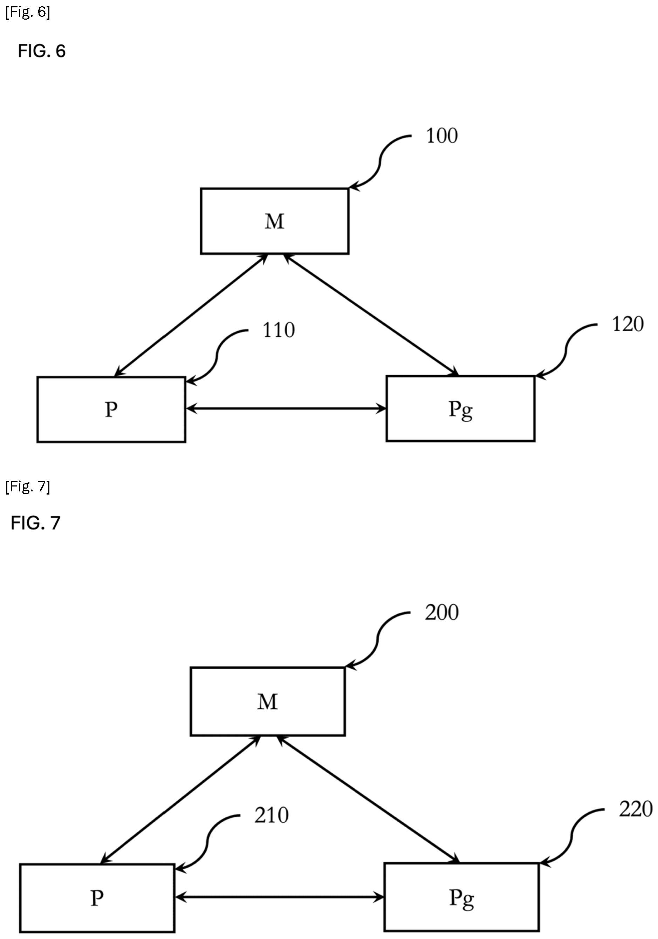

Il est fait référence à la figure 6, qui représente un exemple de premier terminal U1 selon l'invention. Le premier terminal U1 comprend une mémoire 100, une unité de traitement 110, équipée par exemple d'une machine de calcul programmable ou d'une machine de calcul dédiée, par exemple un processeur P, et pilotée par le programme d'ordinateur 120, mettant en œuvre des étapes du procédé de sécurisation selon au moins un mode de réalisation de l'invention. A l'initialisation, les instructions de code du programme d'ordinateur 120 sont par exemple chargées dans une mémoire RAM avant d'être exécutées par le processeur de l'unité de traitement 110. Le processeur de l'unité de traitement 110 met en œuvre des étapes de sécurisation susmentionné selon les instructions du programme d'ordinateur 120.

Il est fait référence à la figure 7, qui représente un exemple de serveur S selon l'invention. Le serveur S comprend une mémoire 200, une unité de traitement 210, équipée par exemple d'une machine de calcul programmable ou d'une machine de calcul dédiée, par exemple un processeur P, et pilotée par le programme d'ordinateur 220, mettant en œuvre des étapes du procédé de sécurisation selon au moins un mode de réalisation de l'invention. A l'initialisation, les instructions de code du programme d'ordinateur 220 sont par exemple chargées dans une mémoire RAM avant d'être exécutées par le processeur de l'unité de traitement 210. Le processeur de l'unité de traitement 210 met en œuvre des étapes de sécurisation susmentionné selon les instructions du programme d'ordinateur 220.

## Revendications

1. Procédé de sécurisation d'un échange initié par un deuxième équipement terminal (U2) à destination d'un premier équipement terminal (U1), le procédé étant **caractérisé en ce qu'**il comprend :
- une obtention (E10, F10, G10, H10) d'un premier vecteur de caractéristiques (V1) associé audit premier équipement terminal (U1) et d'un deuxième vecteur de caractéristiques (V2) associé audit deuxième équipement terminal (U2), les premier et deuxième vecteurs de caractéristiques (V1, V2) étant chacun obtenus à l'aide d'une projection appliquée sur un graphe d'historique d'échanges (G), ledit graphe d'historique synthétisant un historique des échanges entre une pluralité de terminaux comprenant les premier et deuxième équipements terminaux (U1, U2);
- un déclenchement (E14, F14, G14, H14) d'une action au sein du premier équipement terminal bloquant ou autorisant ledit échange en fonction des premier et deuxième vecteurs de caractéristiques.

2. Procédé de sécurisation selon la revendication précédente dans lequel le graphe d'historique d'échanges est stockée de manière distante dudit premier équipement terminal.

3. Procédé de sécurisation selon l'une quelconque des revendications précédentes comprenant en outre :
- une comparaison (E12, F12, G12, H12) entre les premier et deuxième vecteurs de caractéristiques,
le déclenchement (E14, F14, G14, H14) de l'action au sein du premier équipement terminal bloquant ou autorisant ledit échange étant réalisé en fonction de ladite comparaison entre les premier et deuxième vecteurs de caractéristiques.

4. Procédé de sécurisation selon l'une quelconque des revendications précédentes, ledit procédé étant mis en œuvre au sein du premier équipement terminal et comprenant :
- une réception (F2) d'une demande d'échange en provenance dudit deuxième équipement terminal (U2), déclenchant l'obtention d'un identifiant (ID_U2) dudit deuxième équipement terminal (U2) ;
- ladite obtention (F10) des premier et deuxième vecteurs de caractéristiques comprenant une réception (F10), en provenance d'un serveur distant (S), dudit premier vecteur de caractéristiques et dudit deuxième vecteur de caractéristiques à l'aide de l'identifiant dudit deuxième équipement terminal.

5. Procédé de sécurisation selon l'une quelconque des revendications précédentes 1-3, ledit procédé étant mis en œuvre par un serveur (S) en communication avec ledit premier équipement terminal, et comprenant en outre :
- une obtention (G4, H4) d'un identifiant (ID_U1) du premier équipement terminal (U1) et d'un identifiant (ID_U2) du deuxième équipement terminal (U2) ;
- l'obtention (G10, H10) des premier et deuxième vecteurs de caractéristiques (V1, V2) étant réalisée à l'aide desdits identifiants (ID_U1, ID_U2) ; et
- la transmission (G14, H14), audit premier équipement terminal, d'un message (d(V1, V2), MSG) dont le contenu est fonction de la comparaison entre les premier et deuxième vecteurs de caractéristiques, laquelle transmission déclenche ladite action (G16, H16) au sein du premier équipement terminal bloquant ou autorisant ledit échange.

6. Procédé selon l'une des revendications précédentes, dans lequel la projection est une projection aléatoire, reposant optionnellement sur l'algorithme *«Fast Random Projection* » FastRP.

7. Procédé selon l'une des revendications précédentes, dans lequel la projection est appliquée sur le graphe d'historique d'échanges à intervalles réguliers selon une fréquence prédéterminée.

8. Procédé selon l'une des revendications précédentes, dans lequel le déclenchement d'une action au sein du premier équipement terminal bloquant ou autorisant ledit échange est mis en œuvre en fonction d'une comparaison entre une distance vectorielle entre les premier et deuxième vecteurs de caractéristiques et un seuil prédéterminé.

9. Procédé selon l'une des revendications précédentes, dans lequel l'action au sein du premier équipement terminal est un blocage automatique de la demande d'échange.

10. Procédé selon l'une des revendications précédentes, dans lequel l'action au sein du premier équipement terminal comprend une présentation d'un signal à l'utilisateur du premier équipement terminal indiquant un caractère frauduleux ou authentique de la demande d'échange.

11. Serveur pour une sécurisation d'un échange initié par un deuxième équipement terminal (U2) à destination d'un premier équipement terminal (U1), le serveur comprenant au moins un processeur configuré pour :
- obtenir (E10, F10, G10, H10) un premier vecteur de caractéristiques (V1) associé audit premier équipement terminal (U1) et un deuxième vecteur de caractéristiques (V2) associé audit deuxième équipement terminal (U2), les premier et deuxième vecteurs de caractéristiques (V1, V2) étant chacun obtenus à l'aide d'une projection appliquée sur un graphe d'historique d'échanges (G), ledit graphe d'historique synthétisant un historique des échanges entre une pluralité de terminaux comprenant les premier et deuxième équipements terminaux (U1, U2) ;
- transmettre à destination du premier équipement terminal un message déclenchant (E14, F14, G14, H14) une action (G16, H16) au sein du premier terminal bloquant ou autorisant ledit échange en fonction du premier vecteur de caractéristiques et du deuxième vecteur de caractéristiques.

12. Équipement terminal apte à recevoir une demande d'échange initié par un deuxième équipement terminal (U2) à destination dudit équipement terminal, appelé premier équipement terminal (U1), le premier équipement terminal comprenant au moins un processeur configuré pour :
- autoriser ou bloquer ledit échange en fonction d'un premier vecteur de caractéristiques (V1) associé audit premier équipement terminal (U1) et d'un deuxième vecteur de caractéristiques (V2) associé audit deuxième équipement terminal (U2), les premier et deuxième vecteurs de caractéristiques (V1, V2) étant chacun obtenus à l'aide d'une projection appliquée sur un graphe d'historique d'échanges (G), ledit graphe d'historique synthétisant un historique des échanges entre une pluralité de terminaux comprenant les premier et deuxième équipements terminaux (U1, U2).
